Europäisches Patentamt

European Patent Office

Office européen des brevets

(19)

(11) Publication number: **0 114 897**

**A1**

(12) **EUROPEAN PATENT APPLICATION**

(21) Application number: **82201547.5**

(22) Date of filing: **27.01.83**

(51) Int. Cl.³: **B 01 D 53/20**

(43) Date of publication of application:
**08.08.84** Bulletin **84/32**

(84) Designated Contracting States:
**AT BE CH DE FR GB IT LI LU NL SE**

(71) Applicant: **DOW CHEMICAL (NEDERLAND) B.V.**
Herbert H. Dowweg 4
Terneuzen(NL)

(72) Inventor: **Koolen, Johannes L. A.**
Berkelstraat 3
NL-4535 CH Terneuzen(NL)

(74) Representative: **Urbanus, Henricus Maria, Ir. et al,**
c/o Vereenigde Octrooibureaux Nieuwe Parklaan 107
NL-2587 BP 's-Gravenhage(NL)

(54) **Dump packing element.**

(57) A dump packing element having a large specific-surface area to fractional voids volume exhibiting particular performance characteristics in operations involving fluid-fluid contact. Specifically, when placed in a fluid-fluid contact apparatus, the dump packing provides a relatively large number of equivalent theoretical stages per unit height of packed bed at a low pressure drop over each theoretical stage. A preferred packing element comprises a perforated curved base member (1), comprising curved flat base strips (10) having free ends and flanges (13), and carrying a bridging member (2) with two bridged strips (11) oppositely curved from the base strip (10). The strips are deformed by a strengthening ridge (12).

FIG 1

0114897

## DUMP PACKING ELEMENT

The present invention relates to a dump packing element useful in operations involving fluid-fluid contact such as the contact of a gas and a liquid.

A tower, column or other structure containing a packing is commonly employed in operations which involve fluid-fluid contact such as distillation, absorption, desorption and the like. In many such applications, the fluids are brought into contact in countercurrent flow with the more dense fluid (i.e., the liquid in the case of gas liquid contact) flowing downwardly in the packed bed and the less dense fluid (i.e., gas) flowing upwardly through the bed. In other applications such as cross-flow cooling towers, the fluids generally flow at right angles to each other with the liquid flowing downwardly through the bed and the gas flowing across the bed. In these and other processes involving fluid-fluid contact, the packing employed will affect the efficiency of the operation.

The packing employed heretofore in many such operations has conventionally been composed of a large number of identical bulk packing elements (commonly referred to as random or dumped packing) such as Rasching, Lessing or Pall rings and spiral ring packing. Unfortunately, the packings do not generally possess the properties required to give the often desired performance. For example, in operation, the pressure drop per theoretical stage exhibited by these packings is unacceptably high for many applications.

Various dump packing elements which exhibit improved performance, thereby providing more efficient operation (e.g., more operation capacity per unit of packed bed volume) than conventional ring packings have recently been proposed. For example, U.S. Patent 4,041,113 discloses a dump packing element of a metallic or plastic tubular member comprising a pair of oppositely curved strip members connected at their ends. In the claimed embodiment, associated with each strip member is an inwardly curved, additional strip member having no free ends which prevents nesting of the packing elements and facilitates a horizontal alignment of the elements with respect to each other. U.K. Patent Specification 1,573,745 describes a substantially cylindrical packing element having free fingers cut from a cylinder and bent inwardly toward the cylinder axis. Yet another dump packing element has been described in U.K. Patent Application 2.007.109. The described packing comprises a curved, perforated base member and an oppositely curved, bridging member carried by the base member. Portions of the bridging member are cut to form fingers which extend to the interior of the space defined by the base and bridging members. While the described packings offer performance and operating advantages over the more conventional packings, still further improvements in the performance properties of a dump packing, particularly, a reduction in the height per equivalent theoretical stage and the pressure drop exhibited over each theoretical stage, are desired.

Ordered packings such as described by U.S. Patent Nos. 3,679,537 and 4,122,011 which consist of a plurality of mutually connecting layers of a partially corrugated mesh of perforated material exhibit a more desirably height per equivalent theoretical stage and a lower pressure drop per theoretical stage than the dump packings. Unfortunately, these ordered packing are relatively expensive. Moreover, the installation of such packings is significantly more expensive and time consuming than the installation of the more conventional dump packing.

Therefore, to further increase the efficiency of the fluid-fluid contact operations using a dump packing as well as the scope of operations to which a dump packing can be applied, it remains highly desirable to provide a dump packing element having further improved properties, particularly, a dump packing element which provides a greater number of equivalent theoretical stages per unit of packed bed height at a lower pressure drop over each theoretical stage than has heretofore been obtained with a dump packing.

Accordingly, the present invention is a dump packing element having such further improved performance characteristics. The packing element of the present invention is characterized by its high specific surface area (surface area of packing per unit of packed bed volume) to fractional voids volume $(\varepsilon)$. Specifically, the dump packing element of the present invention is formed from a sufficiently thin material to possess a specific surface area (S) of at least 8000 times the fractional void volume of the packing $(1-\varepsilon)$. Surprisingly, a packing element having such a large specific surface area to fractional void volume can possess a relatively high specific surface area (S), for example, of greater than 180 square meters ($m^2$) of surface area per cubic meter ($m^3$) of packed bed volume. In operation, the pressure drop over each theoretical stage ($\Delta p/TS$) of a packed bed comprised of these packing elements is significantly lower than the $\Delta p/TS$ exhibited by known dump packings having the same, specific surface area.

In a preferred embodiment, the dump packing element having the specified ratio of specific surface area to fractional voids volume comprises a perforated, curved base member carrying a bridging or rib member of at least one bridging or rib strip curved oppositely to the base member and having no free ends, wherein at least one of the bridging or rib strip(s) has a deformation sufficient to strengthen or stiffen the packing element.

By deforming the bridging strips such as by incorporating a stiffening ridge or rill over at least a portion of the length of the bridging strip, the physical strength of the packing element is increased. Therefore, a sufficiently strong packing possessing a high fractional void volume can be prepared from a single piece of fabrication material having a thickness less than that employed in the preparation of prior art packings, thereby making the packing elements of the present invention less expensive than the prior art packings.

Due to their superior properties, the packing elements of the present invention are useful in a wide variety of fluid-fluid contact operations including distillation, absorption, extractive distillation, extraction and chemical reactions.

The design of the packing element of the present invention depends on achieving the desired balance of properties, e.g., fractional voids and surface area per unit of packed bed volume. Although the desired properties of the packing will vary depending on the specific application of the packing element, the packing element of the present invention is designed such that the specific surface area S expressed as $m^2/m^3$ is at least 5500 times the fractional packing volume which is expressed as $(1-\varepsilon)$ wherein $\varepsilon$ is the fractional voids in the dry packing, (i.e., the total volume of free space or voids divided by the total packed bed volume).

Preferably, S is at least 8000 times larger, more preferably at least 9000 times larger, most preferably 10,000 times larger, than the fractional volume of the packing.

The packing elements of the present invention are continuous or closed structures and preferably comprise a curved base member and at least one oppositely curved bridging or rib strip deformed so as to stiffen or strengthen the packing element. Representative of the preferred packing elements are illustrated in the accompanying drawing, in which:

Figs. 1 and 2 are a front view and a side view, respectively, of a preferred packing element of the present invention,

Fig. 3 is a front view of another preferred packing element of the present invention, and

Figs. 4 and 5 are side views of other embodiments of the present invention.

Fig. 6 is a perspective view of yet another preferred packing element of the present invention.

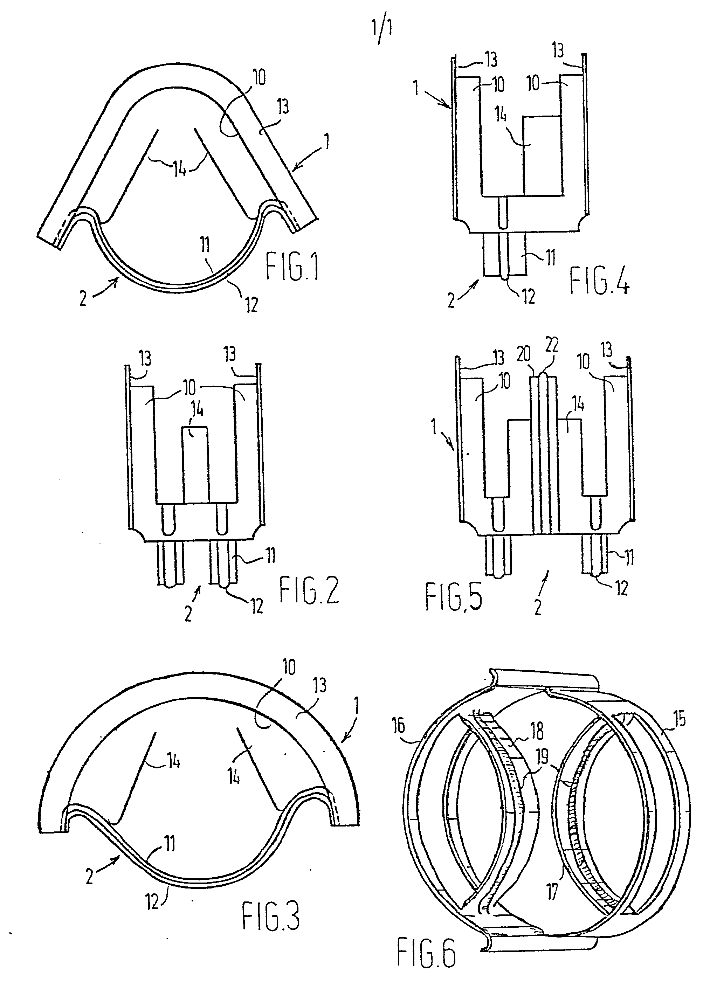

Referring now more particularly to Figs. 1-3, the packing elements illustrated in these Figures comprise a perforated, curved base member 1 comprising curved, flat base strips 10 having free ends and flanges 13 and carrying a bridging member 2 comprised of two bridge strips 11 oppositely curved from the base strip 10. The base strips 10 are strips deformed by a strengthening or stiffening ridge 12 extending over their length. Optionally, tongues or fingers extend from bridge strips into the space defined by the cooperating surfaces of base member and bridge member. The packing elements depicted by Figs. 1-3 are shown having two tongues 14.

In the packing element depicted in Fig. 4, the perforated base member 1 which consists of curved base strips 10 having flanges 13 carries a bridging member 2 of only a single oppositely curved bridging strip 11 having a stiffening or strengthening rib 12. Two tongues 14 extend from bridge strips 11.

The packing element depicted in Fig. 5 is fabricated having a perforated, curved base member 1 comprising two outer base strips 10 having flanges 13 and an inner base strip 20. Although optional, inner-base strip 20 is depicted in Fig. 5 as having a stiffening or strengthening ridge 22. The base member carries a bridging member 2 comprising two bridging strips 40 oppositely curved to the base strips. Rather than having the stiffening or strengthening ridges, the entire width of each bridging strip 40 is rounded to impart the deformation required to stiffen or strenghten the packing element. In said packing element, four tongues 14 extend from the bridge member.

In the packing elements illustrated by Figs. 1-5, the perforated base member can be generally of a semi-elliptical, hyperbolic, parabolic, circular or polygonal shape. The shape of the base member affects the properties of the packing element and is selected accordingly. For example, the strength characteristics and performance of the packing element are affected by the shape of the packing. A packing element as depicted in Fig. 1 wherein the nose of the base member is a circular or elliptical shape with straight end portions extending therefrom is often advantageously employed. Alternatively, the base member is advantageously circular or semi-elliptical, particularly a semi-elliptical shape having one or more separate center of curvative.

Each outer base strip 10 is optionally, but preferably flanged, with the flange serving to further strengthen the packing element and also to space the individual elements from adjacent elements in a randomly packed bed. Alternatively, or in addition to the flange, the packing can be further strengthened by a stiffening ridge or rill extending over the length of the base strip.

The bridging strip or strips 11 are carried by the base member (i.e., at least one end of each bridging strip is connected to the base member), have no free ends and extend into the space at least partially defined by the base member, preferably beyond the open end of the base member. Although the packing elements shown in the Figs. have only one or two bridging strips, the packing element can contain three or even more bridging strips. In general, two bridging strips are preferred.

The deformation of the normally flat bridging strip(s) is suitably any deformation which strengthens or stiffens the packing element, i.e., the strength exhibited by a packing element of this invention is measurably higher than the strength exhibited by an identical packing except having no deformation in the strip members.

0114897

In general, the packing element is stiffened or strengthened by stiffening or strengthening ridges which extend over at least a portion of the length of at least one, preferably each, of the bridging strips 11. Although each of the packing elements depicted by the Figs. 1-4 comprise only one ridge per bridging strip, two or more stiffening or strengthening ridges per bridging strip can be employed. The number, as well as the size, shape and length of the stiffening and strengthening ridges are selected to impact the desired strength characteristics to the packing element. Such strength characteristics will depend in part on the packed bed volume and the total amounts of deformation acceptable in a specific operation. In general, the ridge is merely a rounded impression or identation raised outward from (as depicted in the Figs.) or inward to the space defined by cooperating surfaces of the base and bridging members. Advantageously, each bridging strip contains one ridge running through the middle third of the strip's width and extending over essentially the entire length of each bridging strip and into at least a portion of the base member. Typically, the ridge has a width of from 0.5 to 3 mm and a rounded heigth of less than 1.5 mm.

Alternatively, as depicted in Fig. 5 the entire width of the bridging strip(s) (i.e., stiffening or strengthening ridge) can be curved, or otherwise bend or arced, to provide the necessary deformation required to stiffen or strengthen the packing element. In such case, the entire bridging strip is advantageously curved to a rounded or elliptical, preferably rounded (semi-circular) shape.

In the illustrated packing elements, the fingers 14, which divide the element into channels, assist in imparting a more uniform distribution of gas flow over the surfaces of the packing elements and the number and position of the fingers are advantageously designed accordingly. Although the packing elements depicted by Figs. 1-5 contain two or four fingers, to obtain the desired performance, three, six or even more fingers can extend from the bridge strips. In general, however, the packing element will preferably comprise two or four fingers extending from the base strips.

Referring now to Fig. 6, the illustrated packing element comprises a perforated base member of oppositely curved, flat strip members 15 and 16 having a bridging or rib member composed of strips 17 and 19 formed therefrom. In the middle third of the width of each bridging or rib strip is a stiffening or strengthening ridge 19 extending over the length of the strip.

In the packing element illustrated by Fig. 6, the two oppositely curved strips 15 and 16 may form any closed curve. This closed curve may include re-entrants and does not necessarily have to be a smooth continuous curve but may be made up of a number of straight portions linked by curved or angled portions. The shape formed by these strips affect the properties and performance of the packing and is selected based on the desired packing characteristics. In general, the preferred packing elements, as depicted in Fig. 6, have a generally circular cross-section. To reduce nesting of individual packing elements and to otherwise improve optimum performance, the packing element of Fig. 6 has dimensions such that the diameter of the element (i.e., the maximum dimension of the base member formed by strips 15 and 16 in its plane of curvature) is greater than its width (i.e., the maximum linear dimension of either strip 15 or 16 in a plane normal to the plane of curvature). Preferably, the ratio of the diameter to the width is greater than 1:1 but less than 10:1 and more preferably ranges from 1.5:1 to 4:1.

The bridging strips 17 and 18, which provide a more uniform distribution of the fluids and greater fluid-fluid contact, have no free ends and are carried by strips 15 and 16, respectively. Bridging strips 17 and 18 are oppositely curved with respect to the base strips 15 and 16 by which they are carried and oppositely curved with respect to each other. Although not depicted in Fig. 6, optionally, finger or tongue strips can extend from one or both of the bridging strips 17 and 18 into the area enclosed by base strips 15 and 16.

The strengthening or stiffening ridges 19 extend over the length of one or both of the bridging strips 17 and 18 to stiffen or otherwise strengthen the packing element. The size, shape and length of the ridge 12 are selected to impart the desired strength characteristics to the packing element. A rounded impression or identation running through the middle third of the width of the strips 17 and 18 and extending over all or essentially entire length of each strip is generally preferred. Alternatively, one or both of the bridging strips can be rounded over the entire width and at least a portion of their length to strengthen or stiffen the packing element.

In the design of the packings of the present invention, to facilitate effective fluid-fluid contact, the strip members are prepared having surfaces which are not excessively wide but which are sufficiently wide to cause horizontal displacement of any liquid wetting the surfaces such that the liquid is uniformly distributed throughout the cross-section of the packed bed. Therefore, the surfaces are sufficiently wide to prevent the liquid from balling up on the surface and dripping from them as from a wire. In general, the width of any individual member is advantageously at least 1 mm with the maximum width being advantageously less than 10 mm. Preferably, the width of the strip members and fingers, if any, range from 1.5 to 6 mm. To further facilitate effective fluid-fluid contact, the openings in the packing (e.g., the opening between the two bridging strips 11 of the packing element depicted in Figs. 1 and 3) are made sufficiently large such that liquid can flow therethrough without significant bridging of the liquid so as to close the various openings.

The packing element of the present invention is advantageously prepared from a metal sheet or strip having a thickness (i.e. thread) which results in a packing of sufficient strength for its intended application. In general, the metal most advantageously employed is dependent on a variety of factors including the strength and chemical resistance properties for a specific end use application. Specifically, in an operation requiring the element to be more chemical or corrosive resistant, a corrosion resistant metal such as stainless steel or a less corrosive resistant metal such as carbon steel coated with a layer of a more chemically resistant metal material, e.g., a thin layer of a corrosion resistant metal such as a thin layer of tin or zinc, are advantageously employed. Alternatively, where such corrosion or chemical resistance is required, the element can also be prepared from a suitably resistant ceramic or plastic (including resins) material including epoxy resins and the like. In less corrosive operations, an element fabricated from mild steel is often advantageously employed.

Although conventional dump packing elements are prepared from sheet metal generally have a thickness of 0.3 to 0.6 mm or more, the inclusion of the stiffening rib in one or more strip members of the packing element generally allows the preparation of a sufficiently strong element from a metal sheet of less than 0.3 mm. Preferably, the packing element is formed from a metal sheet having a thickness from 0.1 to 0.25, more preferably from 0.15 to 0.25, mm. In the preparation of a packing element from a ceramic or plastic (particularly from a ceramic) the strip members will generally be thicker than the strip member formed from metal with a corresponding decrease in their general performance.

The packings are generally advantageously prepared using suitable forming equipment such as a stamping press wherein a pre-sized rectangular metal sheet or a continuous tape or ribbon of metal is cut and/or slit and bend and punched into the desired form. The stiffening ridge can be formed coincidently with the remainder of the packing element or can also be formed prior to slitting. In the preparation of packing elements from a metal coated with a thin layer of a corrosion resistant metal, the corrosion resistant metal layer can be applied prior to or subsequent to fabrication of the element. To obtain the greater resistance to chemical attack and/or corrosion, the thin metal layer is generally advantageously applied subsequent to fabrication of the element. The elements formed from a plastic material are advantageously fabricated using injection molding techniques.

0114897

The following Example is set forth to illustrate the advantages of the packing element of the present invention as compared to commercially available packings and should not be construed to limit the scope of the invention.

## Example

A packing element (Packing No. A) having the general shape as illustrated in Fig. 1 is prepared from a piece of sheet metal having a thickness of 0.15 mm. The tip of the base strip is circular with a radius of 6 mm with the sides of the base strip extending essentially straight therefrom. The bridging strips are essentially circular having a radius of 8 mm. The solid portion of each base strip is 3 mm wide with a flange of an additional 2 mm, the bridging strips are 3 mm wide and tongues are 2.5 mm wide. The stiffening ridge is a rounded impression running the length of the middle third of the width of each bridging strip.

A packing element (Packing No. B) having the general shape illustrated in Fig. 3 is prepared from a piece of sheet metal having a thickness of 0.15 mm. The entire base strip is semi-circular with a radius of 16 mm. The bridging strips are essentially circular having a radius of 8 mm. Each base strip is 3,5 mm wide with a flange of an additional 2 mm, the bridging strips are 3.5 mm and the tongues are 3 mm wide. The stiffening ridge is a rounded impression running the length of the middle third of the width of each bridging member. The resistance of this packing element to compression is measured by slowly compressing and measuring the force required to deform the packing element. When compressed along the line indicated by two arrows 30 in Fig. 3, the compressive strength is measured as 1.7 kilograms force (kg). The compressive strength along the line indicated by arrows 31 in Fig. 3 is 1.5 kg and the compressive strength along the line indicated by arrows 32 in Fig. 2 is 3.0 kg. The compressive strength of a similar packing except having no stiffening rib in the bridging members is significantly less in at least one of the three tested directions.

-11-

0114897

A packing element (Packing No. C) being identical to Packing No. B except that the base strip is semi-circular with a radius of 20 mm, each base strip is 4 mm wide with a flange of 2,5 mm. and the bridging strip and tongues are 4 mm wide is prepared from a piece of sheet metal having a thickness of 0,2 mm. The compressive strength of this packing element along line 30-30 is 3,5 kg, the compressive strength along line 31-31 is 2,7 kg and the compressive strength along line 32-32 is 7,2 kg. Again, the compressive strengths of an identical packing element except having no deformation in the bridging strips is significantly less along at least one of ·the three lines of compression.

A packing element (Packing No. D) which is identical to Packing No. C except that the base strip is semi-circular with a radius of 25 mm, each base strip is 5 mm wide with a flange of an additional 3 mm and each bridging strip and tongue is 5 mm wide is prepared.

The specific surface area (S), i.e., the surface area of packing per unit volume of packed bed, the fractional voids of the dry packing and the factor $S/(1-\varepsilon)$ is determined for each of these packings and set forth in Table I. For purposes of comparison, the values $S$, $\varepsilon$ and $S/(1-\varepsilon)$ for various commercially employed dump packing elements are recorded.

## TABLE I

| Sample No.(1) | Thickness, mm. | Specific Surface Area (S) m²/m³ (2) | ε Voids(3) | 1 - ε | S/(1-ε) |
|---|---|---|---|---|---|
| A | 0.15 | 218 | 0.983 | 0.017 | 13293 |
| B | 0.15 | 182 | 0.9863 | 0.0137 | 13285 |
| C | 0.2 | 150 | 0.985 | 0.015 | 10000 |
| D | 0.2 | 100 | 0.99 | 0.01 | 10000 |
| IMTP 25* | 0.4 | 230 | 0.9546 | 0.0456 | 5044 |
| IMTP 40* | 0.4 | 147 | 0.971 | 0.029 | 5069 |
| IMTP 50* | 0.47 | 98 | 0.977 | 0.023 | 4261 |
| IMTP 70* | 0.64 | 56 | 0.982 | 0.018 | 3111 |
| PALL RINGS 15* | 0.4 | 316 | 0.935 | 0.065 | 4862 |
| PALL RINGS 25* | 0.6 | 186 | 0.942 | 0.058 | 3207 |
| PALL RINGS 35* | 0.8 | 148 | 0.94 | 0.06 | 2467 |
| PALL RINGS 50* | 1.0 | 100 | 0.95 | 0.05 | 2000 |
| CMR 1* | 0.25 | 250 | 0.9683 | 0.0317 | 7886 |
| CMR 2* | 0.32 | 139 | 0.9776 | 0.0224 | 6205 |
| HY-PAK I* | 0.45 | 177 | 0.96 | 0.04 | 4425 |
| HY-PAK II* | 0.63 | 95 | 0.97 | 0.03 | 3166 |
| HY-PAK III* | 0.68 | 59 | 0.98 | 0.02 | 2950 |

*Not an example of the present invention.

(1)    The commercially available packing elements are listed in abbreviated form with:

IMTP = Intalox metal tower packing somewhat similar to that illustrated in Fig. 1 except having four fingers and a third base strip and no reinforcing ribs sold by Norton Company with the numbers referring to the nominal size of the packing. A description of one of these packings, with illustrations, is presented in bulletin 5M-31503-11-79 published by Norton Company.

Pall Rings = metal Pall rings. The numbers refer to the relative diameter of the rings with 15 = 15 mm diamter, 25 = 25 mm diameter, 35 = 35 mm diameter and 50 = 50 mm diameter.

CMR = flanged metal rings perforated to form tongues extending into the interior of the ring, with ring designated 1 being smaller than the ring designated 2.

Hy-Pak = Hy-Pak packing, a ring-type metal tower packing available from Norton Company with the higher numbers representing packing of lower specific surface area.

(2)    Specific Surface Area S is the surface area of the packing per unit of packed bed volume determined by measuring the surface area of one packing element and subsequently counting the number of packing elements required to fill a specific volume. S is then calculated by dividing the product of the surface area of one element times the number of elements necessary to fill the volume by the volume.

(3)    The fractional voids (ε) is determined by measuring the solid volume of one packing element, and subsequently counting the number of packing elements required to fill a specified volume. ε is then calculated by dividing the product of solid volume of one element times number of elements per specified volume by the volume and then subtracting the result from 1.

As evidenced by the comparatively high values of $S/(1-\varepsilon)$, the packing elements of the present invention exhibit a superior balance of surface area per unit of packed bed volume and free space (i.e., fractional voids) than the packing elements conventionally employed heretofore.

To illustrate the strength of the packing elements of the present invention, Packing No. C is loaded into a column of 1.45 meter depth and 13.8 cm diameter and then subjected to a pressure equivalent to a 9 meter bed height. Upon exposure to such pressure, the height of the bed is measured to be 1.44 meter, indicating that there is essentially no deformation of the packing. When subjected to similar testing, the height of the packed bed comprised of Packing No. B is measured to be 1.42 meters. A packing identical to packing No. B except having no deformation in the bridging strips is tested in an identical manner and exhibits a bed height of less than 1.4 meter upon exposure to pressure equivalent to a 9 meters bed height.

Moreover, as evidenced by the lower fractional packing volumes (which correlates directly to the weight of packing per packed bed volume and hence the cost of the packing), the amount of materials required for the packing element of the present invention are found to be significantly lower than the amount of material needed for the preparation of the prior art packings.

To show the effectiveness of the dump packing of this invention having the high $S/(1-\varepsilon)$ value, a distillation column of 35 cm diameter and equipped with two beds of about 3 m length is randomly packed with packing elements designated Sample No. B. The packed bed is operated at total reflux to separate a mixture of toluene and isooctane. The mean height per equivalent theoretical stage (HETS) is calculated. The pressure drop per theoretical stage ($\Delta p/TS$) is calculated by measuring the pressure drop at an F factor of 2 wherein F=velocity x$\sqrt{\text{specific gravity}}$ of the vapors in (m/sec) x $\sqrt{(kg/m^3)}$. Similarly, the mean HETS and $\Delta p/TS$ are calculated for various of the other packings specified in Table I. The results are reported in Table II with packing elements possessing similar specific surface areas being grouped.

## TABLE II

| Sample No. (1) | $S$, $m^2/m^3$ | $S/(1-\epsilon)$ | HETS cm | $\Delta P/TS$, mmHg |
|---|---|---|---|---|
| A | 218 | 13293 | 40 | 1.2 |
| IMPT 25* | 230 | 5044 | 42 | 2.1 |
| B | 182 | 13285 | 45 | 1.0 |
| PALL RINGS 25* | 186 | 3207 | 40 | 3.08 |
| C | 150 | 10000 | 52 | 1.0 |
| IMPT 40* | 147 | 5069 | 53 | 1.3 |
| PALL RINGS 35* | 148 | 2467 | 53 | 2.4 |
| D | 100 | 10000 | 71 | 0.8 |
| IMTP 50* | 98 | 3111 | 65 | 0.9 |
| PALL RINGS 50* | 100 | 2000 | 72 | 2.1 |
| Hy-PAK II* | 95 | 3166 | 64 | 1.2 |

\* Not an example of the present invention.

(1) Same as Footnote (1) in Table I.

0114897

As evidenced by the data in Table II, in the described operation, the packing elements of the present invention which possess a superior balance of specific surface area of packed bed volume and fractional voids (as evidenced by the comparatively high $S/(1-\varepsilon)$ values) provide an excellent combination of an exceptionally low heigth per equivalent theoretical stage as well as a surprisingly low pressure drop per theoretical stage when compared to the prior art packings having similar specific surface area but lower $S/(1-\varepsilon)$ values. Therefore, the dump packing elements of the present invention provide a more efficient operation and the ability to increase capacities of existing columns without physically increasing the column volume.

0114897

## C L A I M S

1. A dump packing element formed from a sufficiently thin material such that the element possesses a specific surface area of at least 8000 times the fractional void volume of the packing.

2. The dump packing element of Claim 1 being prepared from a metal sheet having a thickness of less than 0.3 mm.

3. The dump packing of Claim 2 having a specific surface area of at least 9000 times the fractional packing volume of the dump packing.

4. The dump packing of Claim 3 being prepared from a metal sheet having a thickness of from 0.1 to 0.25 mm.

5. The dump packing of Claim 4 having a specific surface area of at least 10,000 times the fractional packing volume and being prepared from a metal sheet having a thickness from 0.15 to 0.25 mm.

6. The packing element of Claims 1-5 wherein the packing is stainless steel or carbon steel coated with a thin layer of a more corrosion resistant material.

7. A dump packing element comprising a perforated, curved base member carrying a bridging member of at least one oppositely curved bridging or rib strip having no free ends, said bridging or rib strip(s) having a deformation sufficient to strengthen or stiffen the packing element.

8. The packing element of Claim 7 wherein the surface area per unit of packed bed volume expressed as square meters of surface area per cubic meters of packed bed volume is at least 5500 times larger than the fractional packing volume.

9. The packing element of Claim 8 wherein the dump packing is prepared from a piece of sheet metal having a thickness of less than 0.3 mm.

10. The packing element of Claim 7 wherein the deformation in the bridging or rib strips is at least one stiffening or strengthening ridge extending over at least a portion of the length of the bridging or rib strip.

11. The packing element of Claim 10 wherein the packing is stainless steel or carbon steel coated with a thin layer of a more corrosion resistant material.

0114897

12. The packing element of Claim 10 wherein the surface area per unit of packed bed volume expressed as square meters of surface area per cubic meters of packed bed volume is at least 9000 times larger than the fractional packing volume and the packing is prepared from a piece of sheet metal having a thickness from 0.15 to 0.25 mm.

13. The packing element of Claim 10 wherein the base member comprises a perforated base strip having open ends and curved to partially define a space, said base member carrying a bridging member comprising at least one bridging strip, oppositely curved to the base member, having at least one stiffening rib extending over its length, and extending into the space partially defined by the base member.

14. The packing element of Claim 13 wherein the base member comprises a perforated base strip having a circular or elliptical shaped nose and straight end portions extending therefrom.

15. The packing element of Claim 13 wherein the base member comprises a perforated, semi-elliptical or semi-circular base strip.

16. The packing element of Claims 14 or 15 wherein the bridging member has at least one finger carried by one of the bridging strip(s) and extending therefrom into the space defined by the base and bridging members.

17. The packing element of Claim 16 wherein the base member carries a bridging member comprising two bridge strips oppositely curved to the base member, said bridging member having two fingers extending into the space defined by the base and bridging member.

18. The packing element of Claim 16 wherein the base member carries a single, oppositely curved, bridging strip having two fingers extended therefrom.

19. The packing element of Claim 16 wherein the base member comprises two curved outer base strips and an inner base strip and the base member carries a bridging member comprising two bridging strips oppositely curved to the base strips and having four fingers extending therefrom.

-18-

0114897

20. The packing element of Claim 16 wherein the base member comprises of two oppositely curved base strips which have a essentially circular shape, each of said base strips carrying at least one rib or bridging strip having no free ends and being oppositely curved with respect to the base strip from which it is formed and with respect to the other rib strip. each of said bridging strips having at least one stiffening or strengthening rib extending over at least a portion of its length.

21. A dump packing element comprising a perforated, curved base member carrying a bridging member of at least one oppositely curved bridging or rib strip having no free ends, said base member having a stiffening or strengthening ridge extending its length.

22. The packing element of Claim 1 wherein the base member comprises two oppositely curved base strips which have an essentially circular shape, each of said base strips carrying at least one rib or bridging strip having no free ends and being oppositely curved with respect to the base strip from which it is formed and with respect to the other rib strip, each of said bridging strips having at least one stiffening or strengthening rib extending over at least a portion of its length.

FIG.1

FIG.4

FIG.2

FIG.5

FIG.3

FIG.6

| Category | Citation of document with indication, where appropriate, of relevant passages | Relevant to claim | CLASSIFICATION OF THE APPLICATION (Int. Cl. ³) |
|---|---|---|---|
| X | DE-B-1 129 931 (GESELLSCHAFT FÜR LINDE'S EISMASCHINEN AG.) * Column 1, line 41 - column 2, line 33; column 3, lines 1-33; column 4, claims 1,5 * | 1-6,11,21,22 | B 01 D 53/20 |
| Y | GB-A-1 541 433 (CITTEN) * Page 1, line 73 - page 2, line 84; page 2, line 120 - page 3, line 2; page 3, claims 1-11 * | 7,10, 13-22 | |
| D,Y | GB-A-2 007 109 (NORTON) * Page 2, claims; figures * | 7,10, 13-22 | |
| D,Y | US-A-4 041 113 (MASS TRANSFER) * Figure 6; claims * | 7,10, 13-22 | TECHNICAL FIELDS SEARCHED (Int. Cl. ³) |
| A | DE-C- 457 966 (I.G. FARBENINDUSTRIE) | 1 | B 01 D |
| A | DE-C- 883 143 (SOLVAY) | 7 | |

## DOCUMENTS CONSIDERED TO BE RELEVANT

The present search report has been drawn up for all claims

| Place of search | Date of completion of the search | Examiner |
|---|---|---|
| THE HAGUE | 17-06-1983 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82